(19)

Europäisches
Patentamt
European
Patent Office
Office européen
des brevets

(11)  **EP 1 504 678 B1**

(12) **EUROPEAN PATENT SPECIFICATION**

(45) Date of publication and mention
of the grant of the patent:
**13.08.2008 Bulletin 2008/33**

(51) Int Cl.:
***A23L 2/54*** *(2006.01)*      ***A23L 1/03*** *(2006.01)*

(21) Application number: **03723370.7**

(86) International application number:
**PCT/JP2003/005989**

(22) Date of filing: **14.05.2003**

(87) International publication number:
**WO 2003/096825 (27.11.2003 Gazette 2003/48)**

(54) **METHOD FOR THE PREPARATION OF A CARBONATED BEVERAGE**

METHOD ZUR HERSTELLUNG EINES KOHLENSÄUREHALTIGEN GETRÄNKS

PROCEDE POUR LA PREPARATION D'UNE BOISSON GAZEUSE

(84) Designated Contracting States:
**AT BE BG CH CY CZ DE DK EE ES FI FR GB GR
HU IE IT LI LU MC NL PT RO SE SI SK TR**

(30) Priority: **15.05.2002 JP 2002139856**

(43) Date of publication of application:
**09.02.2005 Bulletin 2005/06**

(73) Proprietor: **Ajinomoto Co., Inc.
Tokyo 104-8315 (JP)**

(72) Inventors:
• **TOMIYAMA, Yasuyuki
c/o Ajinomoto Co., Inc.
Kawasaki-shi, Kanagawa 210-8681 (JP)**

• **ABE, Kazuyuki
c/o Ajinomoto Co., Inc.
Kawasaki-shi, Kanagawa 210-8681 (JP)**
• **OHTA, Yoshizu
c/o Ajinomoto Co., Inc.
Kawasaki-shi, Kanagawa 210-8681 (JP)**

(74) Representative: **Strehl Schübel-Hopf & Partner
Maximilianstrasse 54
80538 München (DE)**

(56) References cited:
**EP-A1- 0 097 950          WO-A-94/08473
WO-A1-95/15697          US-A- 5 385 748
US-B1- 6 180 159**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 504 678 B1

**Description**

Technical Field

The present invention relates to a method for the preparation of a carbonated beverage comprising carbonating a raw material liquid for a carbonated beverage or a carbonated beverage stock wherein Aspartame (hereinafter, may be referred to as "APM") which is an amino-acid-based sweetener having a high potency of sweetness, is used as a sweetener and wherein an emulsifier which has an excellent capability of eliminating the foam caused by, or attributable to, Aspartame, is contained.

Background Art

Aspartame is used as a sweetener in a wide variety of sweetened foods including beverages. Further, since Aspartame is about 200 times as sweet as sugar, it is often used as a low-calorie sweetener in carbonated beverages, fruit juice beverages and the like.

However, Aspartame has both a hydrophobic group (phenyl group) and a hydrophilic group in its chemical structure and serves as a surfactant or an emulsifier. It has an HLB value of about 14 as calculated in accordance with Griffin's expression, which HLB value is in the same range as those of ordinary emulsifiers used for O/W emulsification. Incidentally, HLB values are hereinafter expressed as values calculated in accordance with the above Griffin's expression. Further, Aspartame has a molecular weight of about 294.

The HLB values in the present specification refer to those HLB values which have been calculated in accordance with the following expression (1) .

$$\text{HLB Value} = 20 \times (M_H/M) \tag{1}$$

wherein    M: Molecular Weight of the Surfactant, and
          $M_H$: Molecular Weight of the Hydrophilic Group Moiety.

Since a surfactant has a foaming function (function of producing foam) and a foam stabilizing function (function of maintaining the produced foam in a stable state) in a liquid, foam is produced during the production process of beverages (particularly, carbonated beverages such as a cola-based beverage and the like) wherein APM having a surface activating effect is used, or when such beverages are served from an automatic feeder (hereinafter, abbreviated as "soda fountain") installed in an eating place such as a fast food restaurant or the like, and the resulting foam may decrease the production efficiency of such beverages or cause problems in serving the same. More specifically, for example, foam is produced when a raw material liquid for a carbonated beverage which has been prepared by adding optionally an acidifier, a flavoring agent and the like, as required, in addition to APM as the sweetener, to water which is suitable for drinking, is to be bottled after corbonation, i.e., such raw material liquid has been carbonated. As the result, the corbonated liquid is prevented from being bottled in an given amount until the foam disappears, resulting in long-time bottling (problem with respect to production efficiency). Similarly, when such a raw material liquid for a carbonated beverage is poured into a cup from a soda fountain in a fast food restaurant or other eating places while it is carbonated, it takes a long time to pour the liquid into the cup (problem with respect to serving).

As the means for solving the foam formation during the beverage production process and the like, a silicon-based anti-foaming agent or an emulsifier-based anti-foaming agent such as sugar ester or the like, has heretofore been commonly used. However, it is the current situation that a satisfactory solution has not been yet devised which can satisfy both the aspect of sensory requirement and that of effect sustainability. Further, silicone-based anti-foaming agents carry a bad image with respect to safety.

Furthermore, it has been confirmed by the present inventors that these commonly used anti-foaming agents are not so effective for removing (eliminating) the foam attributable to APM.

US-B1-6 180 159 and US-A-5 385 748 disclose liquids wherein aspartame is used as sweetener and wherein an emulsifier is contained.

WO 94/08473 A discloses a beverage premix concentrate wherein aspartame and an emulsifier are optional components.

Under the above circumstances, a method free from problems with respect to the sensory aspect, safety and effect sustainability of a product as compared with the conventional method, is desired so as to eliminate the APM-attributable foam.

Disclosure of the Invention

In view of the above background of the prior art described in the preceding section, it is an object of the present invention to provide means for solving the problems as described above which are caused by the Aspartame-attributable foam by a method free from the problems with respect to the sensory aspect, safety and effect sustainability of a product.

The present inventors have made intensive studies on the solution of the above problems, and as the result, have found that when emulsifiers are selected in consideration of the properties of Aspartame such as the HLB value and the molecular weight, even an emulsifier whose performance as an anti-foaming agent has heretofore not been known, may surprisingly have an excellent effect of eliminating the foam caused by Aspartame. The present invention has been completed based on these findings.

Accordingly, the present invention relates to a method for the preparation of a carbonated beverage comprising a raw material liquid containing Aspartame as a sweetener and an emulsifier having an HLB value of 3 to 11 or/and an emulsifier having a molecular weight of 100 to 270.

Hereinafter, the present invention will be described in greater detail.

An emulsifier (in the narrow sense) used in the method of the present invention which has an excellent effect of eliminating the foam caused by APM is one having an HLB value represented by a value as calculated in accordance with the above Griffin's formula, of 3 to 11. Incidentally, as described above, although the HLB value of Aspartame is about 14, an emulsifier having a lower HLB value than that of Aspartame has an excellent effect of eliminating the APM-caused foam.

In the present specification, an emulsifier substance per se such as glycerine fatty acid ester is referred to as an emulsifier (in the narrow sense), and for the sake of convenience, an emulsifier composition containing an emulsifier in the narrow sense is also referred to as an emulsifier (in the broad sense) unless there is a possibility of misunderstanding in the context.

Further, an emulsifier (in the narrow sense) according to the present invention which has an excellent effect of eliminating the foam caused by APM may have a molecular weight of 100 to 270. As described above, although the molecular weight of Aspartame is about 294, emulsifiers whose molecular weight is lower than that of Aspartame have an excellent effect of eliminating the APM-caused foam.

Illustrative examples of the emulsifier include glycerine fatty acid esters, particularly, glycerine monofatty acid ester and diglycerine monofatty acid ester. Specific examples of such glycerine monofatty acid ester include an emulsifier composition "SUNSOFT No. 700P-2" (the main component being glycerine monocaprylic acid ester (HLB value: about 8.3, and molecular weight: 218)) and an emulsifier composition "SUNSOFT No. 760" (the main component being glycerine monocapric acid ester (HLB value: about 7.4, and molecular weight: 246)) both ex Taiyo Kagaku Co., Ltd., and the like. Specific examples of diglycerine monofatty acid ester include an emulsifier composition "SUNSOFT Q-10D" (the main component being diglycerine monocapric acid ester (HLB value: about 10.3, and molecular weight: 320)) ex Taiyo Kagaku Co., Ltd., and the like. These emulsifiers are more preferable than other materials since they are free from oil floating.

It is needless to say that the two types of physical properties required of the emulsifiers (in the narrow sense) of the present invention, i.e., HLB value and molecular weight, may be carried by one kind of emulsifier as can be understood from the above-exemplified emulsifiers ex Taiyo Kagaku Co., Ltd. However, in addition to such an emulsifier, any emulsifier which satisfies the requirement for either one of the physical properties can be an emulsifier used in the method according to the present invention. For example, the diglycerine monocapric acid ester referred to above has a molecular weight outside the above range for molecular weight and an HLB value within the above range for HLB value. It is needless to say that such emulsifiers may be used singly or in combination of two or more in the method according to the present invention.

It has been found that, surprisingly, the foam caused by APM can be eliminated even with the emulsifiers "SUNSOFT No. 700P-2" or "SUNSOFT No. 760", or "SUNSOFT Q-10D", ex Taiyo Kagaku Co., Ltd. whose performance as an anti-foaming agent has heretofore not been known.

There is no special difficulies in preparation of a carbonated beverage by use of such an emulsifier capable of eliminating the Aspartame-caused foam. The carbonated beverage can be prepared in accordance with a commonly used method except that the emulsifier used in the method of the present invention is added and dissolved in advance in a raw material liquid for a carbonated beverage which has been prepared by use of APM as all or part of the sweetener and in respect of which the foam formation, when it is carbonated, degrades production efficiency and ease of serving.

Regarding the amount of the emulsifier to be used in the raw material liquid, when it is used in too small an amount, the foam-eliminating effect is not exhibited, while when it is used in too large an amount, the foam-eliminating effect is strong, but undesirable taste and favor ascribable to the emulsifier are imparted to the resulting carbonated beverage product, causing a problem from the sensory point of view. One skilled in the art can easily determine an appropriate amount of the emulsifier in a given case in consideration of these circumstances. The emulsifier can be used in an amount of, for example, 0.1 to 20 ppm, preferably 1 to 10 ppm, based on the carbonated beverage product.

Effect sustainability with respect to the present invention refers to a property of sustaining the foam-eliminating effect. According to the present invention, a carbonated beverage which is excellent in the effect sustainability can be produced easily.

Brief Description of the Drawings

Fig. 1 shows the results of a foam-disappearing test (time required for the produced foam to disappear) (Example 1) .
Fig. 2 shows the results of a foam-disappearing test (change with time in the volume of a liquid at the time when a cup is fully filled) (Example 2).
Fig. 3 shows the results of a foam-disappearing test (change with time in foam-disappearing time after 5-second pouring) (Example 2).
Fig. 4 shows the results of a foam-disappearing test (change with time in the number of times of pressing the dispenser button) (Example 2).

Best Mode for Carrying out the Invention

Hereinafter, the present invention will be further described with reference to Examples. However, the technical scope of the present invention shall not be limited by these

Examples.

Example 1: Foam-Disappearing Test (Pre-mixing Method)

In accordance with the compositions shown in the following Table 1, raw material liquids (3 types) for cola beverage were prepared, and carbonated by use of a soda syphon so as to prepare cola beverages. These cola beverages were each spray-poured directly into 1-liter measuring cylinders for 4 seconds, and times required for the produced foams to disappear were measured.

Table 1: Recipes for Cola Beverages (Raw Material Liquids)

| | | | (unit: g) |
|---|---|---|---|
| | Control | Trial Sample 1 | Trial Sample 2 |
| Citric Acid | 0.25 | 0.25 | 0.25 |
| Sodium Citrate | 0.1 | 0.1 | 0.1 |
| Phosphoric Acid (Conc.: 85%) | 0.3 | 0.3 | 0 3 |
| Cola Base | 2 | 2 | 2 |
| Cola Essence | 1 | 1 | 1 |
| APM | 0.5 | 0.5 | 0.5 |
| Emulsifier "SUNSOFT No. 700P-2" | 0 | 0.1 | 0 |
| Emulsifier "SUNSOFT No. 760" | 0 | 0 | 0.1 |
| Ion Exchanged Water | Appropriate Amount | Appropriate Amount | Appropriate Amount |
| Total | 1,000 | 1,000 | 1,000 |

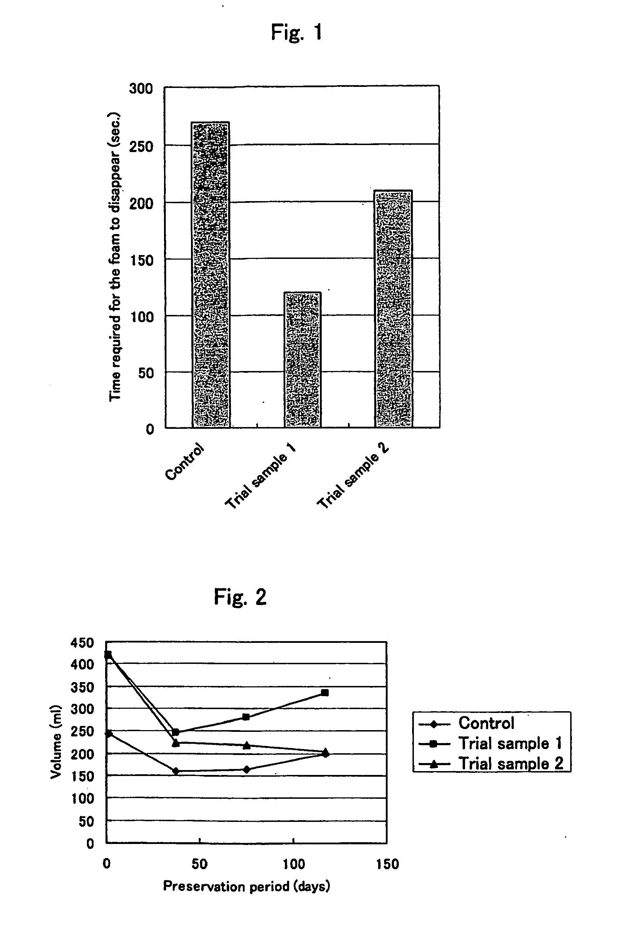

The results will be shown in Fig. 1. As can be understood from Fig. 1, when the cola beverage with no emulsifiers having been add thereto was the control, the cola beverages with an emulsifier having been added thereto (Trial samples 1 and 2) were significantly shorter in foam-disappearing time than the control. Further, from the sensory standpoint, Trial samples 1 and 2 were evaluated to have less undesirable taste and flavor than when other general anti-foaming agents (e.g., sugar ester) were used.

Example 2: Foam-Disappearing Test (Post-mixing Method)

In accordance with the compositions shown in the following Table 2, raw material concentrated liquids (3 types) for cola beverage were prepared and then poured into cups from a dispenser so that they were diluted with carbonated water at a dilution ratio of 1:5.4. The volume of the liquid in each cup was measured, when the cups were filled with the liquid and foam. Further, times required for the produced foams to disappear were measured, after the cola beverages were poured into the cups for 5 seconds. Finally, the number of times when the dispenser button was pressed to fill up the cups with the cola beverages were also measured. These measurements were made on the day when the syrups (raw material concentrated liquids) started to be preserved and on the 37th day, 75th day and 117th day after the syrups started to be preserved.

Table 2: Compositions of Cola Beverages (Raw Material Concentrated Liquids)

| | Control | Trial Sample 1 | Trial Sample 2 |
|---|---|---|---|
| Citric Acid | 2.88 | 2.88 | 2.88 |
| Sodium Citrate | 1.14 | 1.14 | 1.14 |
| Phosphoric Acid (Concentration: 85%) | 3.45 | 3.45 | 3.45 |
| Cola Base | 19.2 | 19.2 | 19.2 |
| Cola Essence | 23.04 | 23.04 | 23.04 |
| APM | 5.76 | 5.76 | 5.76 |
| Emulsifier "SUNSOFT Q-10D" | 0 | 230.4 μl | 0 |
| Emulsifier (Silicone Preparation) | 0 | 0 | 230.4 μl |
| Caffeine | 1.14 | 1.14 | 1.14 |
| Sodium Benzoate | 1.19 | 1.19 | 1.19 |
| Ion Exchanged Water | Appropriate Amount | Appropriate Amount | Appropriate Amount |
| Total | 1,800 | 1,800 | 1,800 |
| * Unit: No description expresses gram(s) | | | |

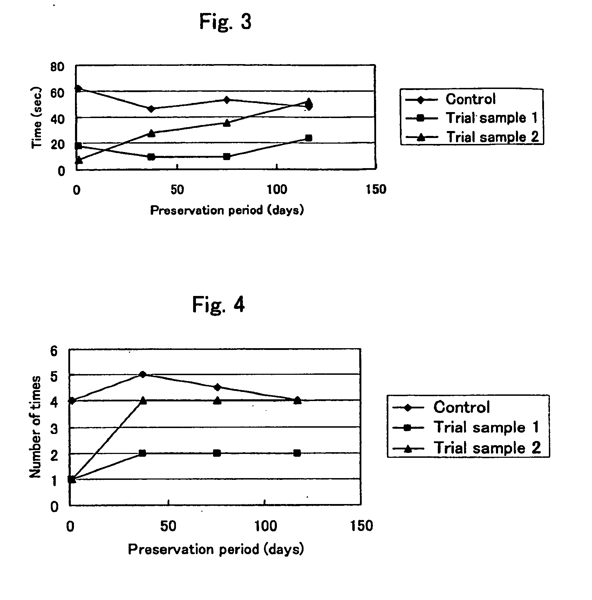

The results will be shown in Figs. 2, 3 and 4.
As can be understood from Figs. 2, 3 and 4, when the cola beverage with no emulsifiers having been added thereto was the control, the cola beverages with an emulsifier having been added thereto (Trial samples 1 and 2) could be poured into the cups in larger amounts, and were alleviated in handling and improved in serving problems, as compared with the control. The Trial sample 1 had a higher foam-eliminating effect as compared with the Trial sample 2 containing the silicone preparation which is a general anti-foaming agent even after preserved as a concentrated syrup. Further, these Trial samples were evaluated to have no sensory differences from the control (by Triangle Test at N = 16. As a result, no significant difference was found, and the samples were indiscernible from the control.)

Industrial Applicability

According to the present invention, foam attributable to Aspartame may be easily eliminated or may be easily made to disappear, in respect of carbonated beverages wherein Aspartame is used as a sweetener, whereby problems with respect to production efficiency and those with respect to serving may, in turn, be easily solved.

**Claims**

**1.** A method for the preparation of a carbonated beverage comprising carbonating a raw material liquid containing Aspartame as a sweetener and an emulsifier having an HLB value of 3 to 11 or/and an emulsifier having a molecular weight of 100 to 270.

**2.** The method as set forth in Claim 1, wherein said emulsifier is a glycerine fatty acid ester.

**3.** The method as set forth in Claim 2, wherein said glycerine fatty acid ester is at least one selected from the group consisting of glycerine monocaprylic acid ester, glycerine monocapric acid ester and diglycerine monocapric acid ester.

**Patentansprüche**

**1.** Verfahren zur Herstellung eines kohlensäurehaltigen Getränks, welches das Versetzen einer Ausgangsmaterialflüssigkeit, enthaltend Aspartam als Süßmittel und ein Emulgiermittel mit einem HLB-Wert von 3 bis 11 und/oder ein Emulgiermittel mit einem Molekulargewicht von 100 bis 270, mit Kohlensäure umfasst.

**2.** Verfahren nach Anspruch 1, wobei das Emulgiermittel ein Glycerinfettsäureester ist.

**3.** Verfahren nach Anspruch 2, wobei der Glycerinfettsäureester mindestens einer ist, der aus der Gruppe ausgewählt ist, die aus Glycerinmonocaprylsäureester, Glycerinmonocaprinsäureester und Diglycerinmonocaprinsäurester besteht.

**Revendications**

**1.** Procédé pour la préparation d'une boisson gazeuse comprenant la gazéification d'un liquide formant matière première contenant de l'aspartame comme édulcorant et un émulsifiant ayant une valeur HLB de 3 à 11 et/ou un émulsifiant ayant une masse moléculaire de 100 à 270.

**2.** Procédé selon la revendication 1, où ledit émulsifiant est un ester de glycérine et d'acide gras.

**3.** Procédé selon la revendication 2, où ledit ester de glycérine et d'acide gras est au moins un ester choisi dans le groupe consistant en le monoester, de glycérine et d'acide caprylique, le monoester de glycérine et d'acide caprique et le monoester de diglycérine et d'acide caprique.

## Fig. 1

## Fig. 2

## Fig. 3

## Fig. 4

**EP 1 504 678 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6180159 B1
- US 5385748 A
- WO 9408473 A